(19) Europäisches Patentamt
European Patent Office
Office européen des brevets

(11) **EP 4 045 314 B1**

(12) **EUROPÄISCHE PATENTSCHRIFT**

(45) Veröffentlichungstag und Bekanntmachung des Hinweises auf die Patenterteilung:
**27.09.2023   Patentblatt 2023/39**

(21) Anmeldenummer: **20793343.3**

(22) Anmeldetag: **16.10.2020**

(51) Internationale Patentklassifikation (IPC):
**B32B 15/01** (2006.01)      **C23C 28/00** (2006.01)
**C23C 2/40** (2006.01)      **C23C 2/34** (2006.01)
**C23C 2/32** (2006.01)      **C23C 2/26** (2006.01)
**C23C 2/12** (2006.01)      **C22C 38/14** (2006.01)
**C22C 38/12** (2006.01)      **C22C 38/04** (2006.01)
**C22C 38/02** (2006.01)      **C23C 2/02** (2006.01)

(52) Gemeinsame Patentklassifikation (CPC):
**C22C 38/04; B32B 15/012; C22C 38/02; C22C 38/12; C22C 38/14; C23C 2/12; C23C 2/26; C23C 2/40; C23C 28/321; C23C 28/34**

(86) Internationale Anmeldenummer:
**PCT/EP2020/079225**

(87) Internationale Veröffentlichungsnummer:
**WO 2021/074388 (22.04.2021 Gazette 2021/16)**

(54) **VERFAHREN ZUM HERSTELLEN EINES STAHLFLACHPRODUKTS UND VERFAHREN ZUM HERSTELLEN EINES BAUTEILS DARAUS**

METHOD FOR PRODUCING A FLAT STEEL PRODUCT, AND METHOD FOR PRODUCING A COMPONENT THEREFROM

PROCÉDÉ DE PRODUCTION D'UN PRODUIT D'ACIER PLAT ET PROCÉDÉ DE PRODUCTION D'UN COMPOSANT À PARTIR DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2019   DE 102019128238**

(43) Veröffentlichungstag der Anmeldung:
**24.08.2022   Patentblatt 2022/34**

(73) Patentinhaber: **ThyssenKrupp Steel Europe AG 47166 Duisburg (DE)**

(72) Erfinder:
• **BANIK, Janko 58762 Altena (DE)**
• **JUNGE, Fabian 40239 Düsseldorf (DE)**
• **KÖYER, Maria 44141 Dortmund (DE)**
• **RUTHENBERG, Manuela 44143 Dortmund (DE)**

(74) Vertreter: **ThyssenKrupp Steel Europe AG Patente/Patent Department Kaiser-Wilhelm-Straße 100 47166 Duisburg (DE)**

(56) Entgegenhaltungen:
**EP-A1- 2 993 248      EP-A1- 2 995 674
EP-A1- 3 272 906      JP-A- 2013 227 620
US-B2- 10 549 506**

**Beschreibung**

Die Erfindung betrifft ein Verfahren zum Herstellen eines mit einem Schutzüberzug auf Al-Basis versehenen Stahlflachprodukts mit verminderter Anfälligkeit für die Aufnahme von Wasserstoff.

Darüber hinaus betrifft die Erfindung ein Verfahren zum Herstellen eines Bauteils durch Warmumformen eines derart erzeugten, mit einer Korrosionsschutzbeschichtung auf Aluminium-Basis versehenen Stahlflachprodukts.

Als "Stahlflachprodukte" werden hier Walzprodukte verstanden, deren Länge und Breite jeweils wesentlich größer sind als ihre Dicke. Hierzu zählen insbesondere Stahlbänder, Stahlbleche und daraus gewonnene Zuschnitte.

Im vorliegenden Text sind, soweit nicht explizit etwas anderes vermerkt ist, Angaben zu den Gehalten von Legierungsbestandteilen stets in Gew.-% gemacht.

Das Stahlsubstrat erfindungsgemäßer Stahlflachprodukte besteht aus einem Stahl, der zur Gruppe der so genannten "MnB-Stähle" gehört. Stähle dieser Art sind in der EN 10083-3 genormt. Diese Stähle besitzen eine gute Härtbarkeit. Sie erlauben bei einer Warmverformung eine sichere Prozessführung, durch die es auf wirtschaftliche Weise möglich ist, im Zuge der Warmverformung eine Martensithärtung noch im Werkzeug ohne zusätzliche Kühlung zu bewirken. Ein typisches Beispiel für einen solchen Stahl ist der unter der Bezeichnung 22MnB5 bekannte Stahl, der im Stahlschlüssel 2004 unter der Werkstoffnummer 1.5528 zu finden ist. Auf dem Markt erhältlicher, vollberuhigter 22MnB5-Stahl enthält typischerweise neben Eisen und unvermeidbaren Verunreinigungen (in Gew.-%) 0,10 - 0,250 % C, 1,0 - 1,4 % Mn, 0,35 - 0,4 % Si, bis zu 0,03 % P, bis zu 0,01 % S, bis zu 0,040 % Al, bis zu 0,15 % Ti, bis zu 0,1 % Nb, in Summe bis zu 0,5 % Cr + Mo, sowie bis zu 0,005 % B.

Für warmgewalzte und mit einer Al-Beschichtung versehene MnB-Stahlbleche, die zum Herstellen von Stahlbauteilen durch Warmpressformhärten bestimmt sind, ist in der EP 0 971 044 B1 eine Legierungsvorschrift angegeben, gemäß der ein MnB-Stahl neben Eisen und unvermeidbaren Verunreinigungen (in Gew.-%) einen Kohlenstoffgehalt von mehr als 0,20 %, jedoch weniger als 0,5 %, einen Mangangehalt von mehr als 0,5 %, jedoch weniger als 3 %, einen Siliziumgehalt von mehr als 0,1 %, jedoch weniger als 0,5 %, einen Chromgehalt von mehr als 0,01 %, jedoch weniger als 1 %, einen Titangehalt von weniger als 0,2 %, einen Aluminiumgehalt von weniger als 0,1 %, einen Phosphorgehalt von weniger als 0,1 %, einen Schwefelgehalt von weniger als 0,05 % und einen Borgehalt von mehr als 0,0005 %, jedoch weniger als 0,08 % aufweisen soll. Bei der Al-Beschichtung handelt es sich um eine so genannte AlSi-Beschichtung, die aus 9 - 10 Gew.-% Si, 2 - 3,5 Gew.-% Eisen und als Rest aus Aluminium besteht. Die so beschaffenen und beschichteten Stahlflachprodukte werden auf eine Erwärmungstemperatur von mehr als 700 °C erwärmt, anschließend in ein Pressformwerkzeug eingelegt, dort warm zu dem Stahlbauteil geformt und dabei so schnell abgekühlt, dass Härtegefüge im Stahlsubstrat des Stahlflachprodukts entsteht.

Im Anlieferungszustand sind alle Mangan-Bor-Stahlgüten wasserstoffarm. Ihre Gehalte an diffusiblem Wasserstoff liegen jeweils unterhalb der Nachweisgrenze von derzeit 0,1 ppm. Infolge dessen zeigen MnB-Stähle grundsätzlich nur eine geringe Neigung zur wasserstoffinduzierten verspäteten Rissbildung.

In der Praxis hat sich jedoch gezeigt, dass es bei der Warmumformung von mit aluminiumbasierten Schutzüberzügen beschichteten Mangan-Bor-Stählen bei feuchteren Ofenatmosphären zu einer Wasserstoffanreicherung im Stahlsubstrat kommt. Als Grund hierfür ist eine Metall-Wasserdampf Reaktion identifiziert worden. Zu dieser Reaktion kommt es, wenn das mit der Al-Beschichtung versehene Stahlflachprodukt für die Warmumformung in einem Erwärmungsofen unter einer Wasserdampf enthaltenden Atmosphäre auf höhere Temperaturen erwärmt wird. Dabei reagiert der in der Ofenatmosphäre befindliche Wasserdampf an der Werkstoffoberfläche zu Wasserstoff und einem Metalloxid. Der entstehende Wasserstoff diffundiert in den Stahlwerkstoff und kann dann dort zu einem verzögerten Versagen führen, indem er sich bevorzugt in Bereichen hoher Zug-Eigenspannung konzentriert. Wird eine lokal sehr hohe Wasserstoffkonzentration erreicht, schwächt dies die Bindung an den Korngrenzen des Stahlsubstratgefüges so weit, dass es im Gebrauch infolge der dabei auftretenden Spannung zu einem Riss entlang der Korngrenze kommt.

Aus der EP 2 993 248 A1 ist ein für eine Warmumformung mit anschließendem Härten bestimmtes Stahlflachprodukt der voranstehend beschriebenen Art bekannt, das ein aus einem Stahl mit 0,1 - 3 Gew.-% Mn und bis zu 0,01 Gew.-% B erzeugtes Stahlsubstrat und einen auf das Stahlsubstrat aufgetragenen Schutzüberzug auf Basis von Al umfasst, wobei der Schutzüberzug insbesondere ein AlSi-Überzug mit einem Si-Gehalt von 3 - 15 Gew.-% ist. Dabei enthält der Schutzüberzug als zusätzliche Legierungsbestandteile in Summe 0,11 - 0,7 Gew.-% mindestens zweier Elemente aus der Gruppe der Erdalkali- oder Übergangsmetalle, welche eine höhere Sauerstoffaffinität haben als Aluminium, mit der Maßgabe, dass der Magnesium-Gehalt des Schutzüberzugs mindestens 0,1 Gew.-% und der Kalzium-Gehalt des Schutzüberzugs mindestens 0,01 Gew.-% beträgt, und optional in Summe bis zu 20 Gew.-% an anderen Legierungselementen enthält. Durch die Anwesenheit des Erdalkali- oder Übergangsmetalls im Überzug wird die Wasserstoffaufnahme des Stahlsubstrats bei der für die Warmumformung des Stahlflachprodukts erforderlichen Erwärmung minimiert.

Aus der WO 2012/119973 A1 ist es darüber hinaus für Stahlflachprodukte, deren Stahlsubstrat ebenfalls aus mit Mn und Bor legierten Stählen der voranstehend erläuterten Art besteht, die in diesem Fall jedoch mit einer metallischen Schutzbeschichtung auf Basis von Zink versehen sind, bekannt, dass sich durch Aufbringen einer separat und zusätzlich auf die Zn-Schutzschicht aufgetragenen Deckschicht die Gefahr von Rissbildung in der Schutzschicht bei der Warmumformung minimieren lässt. Die gemäß diesem Stand der Technik aufgebrachte Deckschicht enthält dazu eine Oxid-, Nitrid-, Sulfid-, Carbid-, Hydrat- oder Phosphat-Verbindung eines unedlen Metalls. Unter die unedlen Metalle, aus denen die in einer erfindungsgemäßen vorhandenen Oxid-, Nitrid-, Sulfid-, Carbid- oder Phosphat-Verbindungen gebildet sind, fallen dabei alle Metalle, die an Sauerstoff bereits unter Normalbedingungen mit dem Sauerstoff der Atmosphäre reagieren, sowie Erdalkalimetalle, Alkalimetalle und Halbmetalle, auch Metalloide genannt, sowie die Übergangsmetalle.

Aus der WO 2012/120081 A2 ist ebenfalls ein Stahlflachprodukt bekannt, das für eine Wärmebehandlung vorgesehen ist und auf mindestens einer seiner freien Oberflächen eine separate Deckschicht aufweist, die wenigstens eine Oxid-, Nitrid-, Sulfid-, Sulfat-, Carbid-, Carbonat-, Fluorid-, Hydrat-, Hydroxid- oder Phosphat-Verbindung eines unedlen Metalls enthält. Die Deckschicht bewirkt eine Verminderung des Reflektionsvermögens des Stahlflachprodukts, insbesondere wenn auf dem Stahlflachprodukt ein Korrosionsschutzüberzug vorhanden ist. Das so beschichtete Stahlflachprodukt zeichnet sich durch eine erhöhte Absorptionsfähigkeit für Infrarotstrahlung aus. Dabei kann das Stahlflachprodukt mit einer Schutzbeschichtung beispielsweise auf Basis von Aluminium überzogen sein, auf die dann die zusätzliche Deckschicht aufgetragen ist.

Ausgehend von dem eingangs erläuterten Stand der Technik hat sich die Aufgabe gestellt, ein Verfahren anzugeben, das es erlaubt, ein mit einer Korrosionsschutzbeschichtung auf Aluminium-Basis versehenes, für die Warmformgebung geeignetes Stahlflachprodukt zu erzeugen, bei dem mit einfachen Mitteln die Gefahr der Entstehung von wasserstoffinduzierten Rissen minimiert ist.

Darüber hinaus sollte ein Verfahren zur Herstellung eines Bauteils durch Warmumformen eines mit einer Aluminium-Korrosionsschutzbeschichtung versehenen Stahlflachprodukts angegeben werden, bei dem die Gefahr eines Versagens des Bauteils in Folge von wasserstoffinduzierten Rissen minimiert ist.

In Bezug auf die Herstellung des Stahlflachprodukts hat die Erfindung diese Aufgabe durch das in Anspruch 1 angegebene Verfahren gelöst.

In Bezug auf die Herstellung des Bauteils besteht die erfindungsgemäße Lösung der voranstehend genannten Aufgabe darin, dass ein erfindungsgemäßes Stahlflachprodukt durch Anwendung der in Anspruch 11 angegebenen Arbeitsschritte zu einem solchen Bauteil warmgeformt wird.

Dabei versteht es sich von selbst, dass ein Fachmann bei der Anwendung der erfindungsgemäßen Verfahren selbsttätig die Arbeitsschritte ergänzt, von denen er weiß, dass sie bei Verfahren dieser Art im Stand der Technik standardmäßig durchgeführt werden.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßes Verfahren zum Herstellen eines mit einem Schutzüberzug auf Al-Basis versehenen Stahlflachprodukts mit verminderter Anfälligkeit für die Aufnahme von Wasserstoff, umfasst demnach folgende Arbeitsschritte:

a) Bereitstellen eines Stahlflachprodukts, das, in Gew.-%, aus C: 0,1 - 0,4 %, Si: 0,05 - 0,5 %, Cr: 0,005 - 1,0 %, Mn: 0,5 - 3,0 %, B: 0,0005 - 0,01 %, sowie jeweils optional einem oder mehreren der in der Gruppe "V, Ti, Nb, Al, Ni, Cu, Mo, W" zusammengefassten Legierungselemente mit der Maßgabe, dass die Gehalte an dem jeweils optional vorhandenen Legierungselement wie folgt zu bemessen sind: V: 0,001 - 0,2 %, Ti: 0,001 - 0,1 %, Nb: 0,001 - 0,1 %, Al: 0,01 - 0,2 %, Ni: 0,01 - 0,4 %, Cu: 0,01 - 0,8 %, Mo: 0,002 - 1,0 %, W: 0,001 - 1,0 %, und als Rest aus Eisen und unvermeidbaren Verunreinigungen besteht, wobei zu den unvermeidbaren Verunreinigungen Gehalte von weniger als 0,1 % P, von weniger als 0,05 % S und von weniger als 0,01 % N gehören;

b) Beschichten des Stahlflachprodukts mit einer Korrosionsschutzbeschichtung, die aus Aluminium und unvermeidbaren Verunreinigungen sowie optionalen Zulegierungen von, in Gew.-%, jeweils 3 - 15 % Si, 2 - 3,5 % Fe und/oder in Summe 0,05 - 2 % mindestens eines Erdalkali- und Übergangsmetalls aus der Gruppe "Mg, Ca, Sr, Ba, Zr und Ti" besteht;

c) Kaltwalzen des mit der Korrosionsschutzbeschichtung versehenen Stahlflachprodukts in einem Walzgerüst;

d) Erzeugen einer Deckschicht auf der Korrosionsschutzschicht, indem im Bereich des Einlaufs, des Walzspalts oder des Auslaufs des Walzgerüsts eine Trägerflüssigkeit auf die Korrosionsschutzschicht des Stahlflachprodukts aufgetragen wird, die mindestens eine als Sulfat, Nitrat, Phosphat oder Oxid vorliegende Verbindung eines Erdalkali- oder Übergangsmetalls enthält, wobei die derart auf der Korrosionsschutzschicht erzeugte Deckschicht ein Auflagengewicht von 10 - 500 mg/m$^2$ aufweist und 20 - 100 % der Oberfläche der Korrosionsschutzschicht bedeckt.

Aufbauend auf dem erfindungsgemäßen Verfahren zum Herstellen eines mit einem Schutzüberzug auf Al-Basis versehenen Stahlflachprodukts umfasst das erfindungsgemäße Verfahren zum Herstellen eines Bauteils durch Warmumformen eines mit einer Korrosionsschutzbeschichtung auf Aluminium-Basis versehenen Stahlflachprodukts folgende Arbeitsschritte:

i) Erzeugen eines Stahlflachprodukts durch Anwendung des voranstehenden ausgebildeten Verfahrens;
ii) Abteilen eines Zuschnitts von dem Stahlflachprodukt;
iii) Erwärmen des Zuschnitts auf eine Warmumformtemperatur von 840 - 950 °C, um im Stahlsubstrat des Stahlflachprodukts ein austenitisches Gefüge einzustellen ("Austenitisierung");
iv) Umformen des auf die Warmumformtemperatur erwärmten Zuschnitts zu dem Bauteil.

Das im Arbeitsschritt a) des erfindungsgemäßen Verfahrens zum Herstellen eines mit einem Schutzüberzug auf Al-Basis versehenen Stahlflachprodukts bereitgestellte Stahlflachprodukt besteht aus einem konventionellen, für diese Zwecke geeigneten Stahl, dessen Zusammensetzung wie folgt gewählt ist: Kohlenstoff ("C") wirkt in erfindungsgemäßen Stahlflachprodukten verzögernd auf die Bildung von Ferrit und Bainit. Gleichzeitig wird Austenit stabilisiert und die Ac3-Temperatur verringert. Der Kohlenstoffgehalt des Stahls eines erfindungsgemäßen Stahlflachprodukts ist auf 0,10 und 0,4 Gew.-% beschränkt. Ein Kohlenstoffgehalt von mindestens 0,10 Gew.-% ist erforderlich, um die Härtbarkeit des Stahlflachprodukts und die Zugfestigkeit des pressgehärteten Produkts von mindestens 1000 MPa zu gewährleisten. Soll ein höheres Festigkeitsniveau angestrebt werden, so werden bevorzugt C-Gehalte von mindestens 0,15 Gew.-% eingestellt. Wird der C-Gehalt weiter angehoben auf Werte von mindestens 0,19 Gew.-%, insbesondere mindestens 0,205 Gew.-%, so kann überdies die Härtbarkeit verbessert werden, so dass das Stahlflachprodukt eine sehr gute Kombination aus Härtbarkeit und Festigkeit aufweist. Kohlenstoffgehalte größer 0,4 Gew.-% wirken sich jedoch nachteilig auf die mechanischen Eigenschaften des Stahlflachprodukts aus, da C-Gehalte größer 0,4 Gew.-% während des Presshärtens die Bildung spröden Martensits fördern. Durch hohe C-Gehalte kann darüber hinaus die Schweißbarkeit negativ beeinflusst werden. Um die Schweißbarkeit zu verbessern, kann der Kohlenstoffgehalt bevorzugt auf höchstens 0,3 Gew.-% eingestellt werden.

Silizium ("Si") wird zur weiteren Erhöhung der Härtbarkeit des Stahlflachprodukts sowie der Festigkeit des pressgehärteten Produkts über Mischkristallverfestigung verwendet. Silizium ermöglicht außerdem den Einsatz von Ferro-Silizio-Mangan als Legierungsmittel, was sich begünstigend auf die Produktionskosten auswirkt. Ab einem Si-Gehalt von 0,05 Gew.-% stellt sich bereits ein Härtungseffekt ein. Ab einem Si-Gehalt von mindestens 0,15 Gew.-%, insbesondere mindestens 0,20 Gew.-%, tritt ein signifikanter Anstieg der Festigkeit auf. Si-Gehalte oberhalb von 0,5 Gew.-% wirken sich nachteilig auf das Beschichtungsverhalten aus, insbesondere bei Al-basierten Beschichtungen. Si-Gehalte von höchstens 0,4 Gew.-%, insbesondere höchstens 0,30 Gew.-%, werden bevorzugt eingestellt, um die Oberflächenqualität des beschichteten Stahlflachprodukts zu verbessern.

Mangan ("Mn") wirkt als härtendes Element, indem es die Ferrit- und die Bainitbildung stark verzögert. Bei Mangangehalten kleiner 0,5 Gew.-% werden während des Presshärtens selbst bei sehr schnellen Abkühlgeschwindigkeiten Ferrit und Bainit gebildet, was vermieden werden sollte. Mn-Gehalte von mindestens 0,9 Gew.-%, insbesondere mindestens 1,10 Gew.-%, sind bevorzugt, wenn ein martensitisches Gefüge insbesondere in Bereichen größerer Umformung gewährleistet werden soll. Mangangehalte von mehr als 3,0 Gew.-% wirken sich nachteilig auf die Verarbeitungseigenschaften aus, weshalb der Mn-Gehalt erfindungsgemäßer Stahlflachprodukte auf höchstens 3,0 Gew.-% beschränkt ist. Vor allem die Schweißbarkeit ist stark eingeschränkt, weshalb der Mn-Gehalt bevorzugt auf höchstens 1,6 Gew.-% und insbesondere auf 1,30 Gew.-% beschränkt ist. Mangangehalte kleiner oder gleich 1,6 Gew.-% werden darüber hinaus auch aus ökonomischen Gründen bevorzugt.

Chrom ("Cr") wird dem Stahl eines erfindungsgemäßen Stahlflachprodukts in Gehalten von 0,005 - 1,0 Gew.-% zugegeben. Chrom beeinflusst die Härtbarkeit des Stahlflachprodukts, indem es die diffusive Umwandlung während des Presshärtens verlangsamt. Chrom wirkt in erfindungsgemäßen Stahlflachprodukten ab einem Gehalt von 0,005 Gew.-% günstig auf die Härtbarkeit, wobei ein Cr-Gehalt von mindestens 0,1 Gew.-%, insbesondere mindestens 0,18 Gew.-%, für eine sichere Prozessführung, vor allem zur Verhinderung der Bainitbildung, bevorzugt wird. Enthält der Stahl mehr als 1,0 Gew.-% Chrom, so verschlechtert sich das Beschichtungsverhalten. Um eine gute Oberflächenqualität zu erhalten, kann der Cr-Gehalt bevorzugt auf höchstens 0,4 Gew.-%, insbesondere auf höchstens 0,28 Gew.-%, begrenzt sein.

Bor ("B") wird zulegiert, um die Härtbarkeit des Stahlflachprodukts zu verbessern, indem auf den Austenitkorngrenzen angelagerte Boratome oder Borausscheidungen die Korngrenzenenergie verringern, wodurch die Nukleation von Ferrit während des Presshärtens unterdrückt wird. Ein deutlicher Effekt auf die Härtbarkeit tritt bei Gehalten von mindestens 0,0005 Gew.-%, insbesondere mindestens 0,0020 Gew.-%, auf. Bei Gehalten über 0,01 Gew.-% bilden sich hingegen vermehrt Borkarbide, Bornitride oder Bornitrokarbide, welche wiederum bevorzugte Keimstellen für die Nukleation von Ferrit darstellen und den härtenden Effekt wieder absenken. Aus diesem Grund wird der Borgehalt auf höchstens 0,01 Gew.-%, insbesondere höchstens 0,0035 Gew.-%, beschränkt. Bei einer Zulegierung von Bor wird bevorzugt auch Titan zur Abbindung von Stickstoff hinzulegiert. Der Ti-Gehalt sollte in diesem Fall bevorzugt mindestens das 3,42-fache des Gehalts an Stickstoff betragen.

Um bestimmte Eigenschaften des Stahls bzw. des daraus erzeugten Stahlflachprodukts einzustellen, können im Stahl jeweils optional ein Element, zwei oder mehr Legierungselemente der in der Gruppe "V, Ti, Nb, Al, Ni, Cu, Mo, W" zusammengefassten Legierungselementen zugegeben sein, wobei die Gehalte an dem oder den jeweils optional vorhandenen Legierungselement(en) wie folgt zu bemessen sind:

Schon kleinste Mengen Vanadium ("V") von 0,001 Gew.-% können bereits freien Kohlenstoff bei der Anlagerung an Versetzungen behindern. Ab einem V-Gehalt von 0,2 Gew.-% tritt keine Verbesserung der Alterungsbeständigkeit mehr durch Vanadium auf. Die alterungshemmende Wirkung von Vanadium ist bei Gehalten bis zu 0,009 Gew.-% besonders ausgeprägt, wobei sich ein maximaler Effekt ab einem bevorzugten Gehalt von 0,002 Gew.-% einstellt. Bei Gehalten größer 0,009 Gew.-% bilden sich vermehrt Vanadiumkarbide. Da Vanadium neben der Verringerung von Alterungseffekten auch zur Steigerung der Festigkeit durch Ausscheidungsverfestigung beiträgt, können höhere Gehalte von bis zu 0,2 Gew.-% bevorzugt zur Festigkeitssteigerung eingestellt werden. Der Vanadiumgehalt des Stahls eines erfindungsgemäßen Stahlflachprodukts ist zum einen aus Kostengründen auf höchstens 0,2 Gew.-% beschränkt. Zum anderen bewirken höhere Gehalte keine wesentliche Verbesserung der mechanischen Eigenschaften.

Titan ("Ti") ist ein Mikrolegierungselement, welches optional hinzulegiert werden kann, um zur Kornfeinung beizutragen. Außerdem bildet Titan mit Stickstoff grobe Titannitride, weshalb der Ti-Gehalt vergleichsweise gering gehalten werden soll. Titan bindet Stickstoff ab und ermöglicht Bor so, seine stark ferrithemmende Wirkung zu entfalten. Für eine ausreichende Abbindung von Stickstoff wird mindestens das 3,42-fache des Stickstoffgehalts benötigt, wobei mindestens 0,001 Gew.-% Ti, bevorzugt mindestens 0,023 Gew.-% Ti, für eine ausreichende Verfügbarkeit hinzugegeben werden sollten. Ab 0,1 Gew.-% Ti verschlechtert sich die Kaltwalzbarkeit und Rekristallisierbarkeit deutlich, weshalb größere Ti-Gehalte vermieden werden sollten. Um die Kaltwalzbarkeit zu verbessern, kann der Ti-Gehalt bevorzugt auf 0,038 Gew.-% beschränkt sein.

Aluminium ("Al") wird als Desoxidationsmittel zur Abbindung von Sauerstoff eingesetzt. Zudem hemmt Aluminium die Zementitbildung. Zur sicheren Abbindung von Sauerstoff werden mindestens 0,01 Gew.-%, insbesondere mindestens 0,02 Gew.-%, Aluminium im Stahl benötigt. Da allerdings auch die Ac3-Temperatur deutlich mit steigendem Al-Legierungsgehalt nach oben verschoben wird, ist der Al-Gehalt auf 0,2 Gew.-% begrenzt. Ab einem Gehalt von 0,2 Gew.-% behindert Al die Umwandlung in den Austenit vor dem Presshärten zu stark, sodass die Austenitisierung nicht mehr zeit- und energieeffizient durchgeführt werden kann.

Für übliche Ofentemperaturen zwischen 850 und 950 °C, welche zum Austenitisieren vor dem Presshärten eingestellt werden, wird bevorzugt ein Al-Gehalt von höchstens 0,1 Gew.-%, insbesondere höchstens 0,05 Gew.-%, eingestellt, um das Gefüge des Stahl des Stahlsubstrats beim Austenitisieren sicher vollständig in den austenitischen Zustand zu überführen.

Niob ("Nb") kann optional hinzulegiert werden, um ab einem Gehalt von 0,001 Gew.-% zur Kornfeinung beizutragen. Allerdings verschlechtert Niob die Rekristallisierbarkeit des Stahls. Bei einem Nb-Gehalt von über 0,1 Gew.-% lässt sich der Stahl nicht mehr in üblichen Durchlauföfen vor der Feuerbeschichtung rekristallisieren. Um das Risiko einer Verschlechterung der Rekristallisierbarkeit zu reduzieren, kann der Nb-Gehalt bevorzugt auf 0,003 Gew.-% beschränkt werden.

Nickel ("Ni") stabilisiert die austenitische Phase und kann optional hinzulegiert werden, um die Ac3-Temperatur zu verringern und die Bildung von Ferrit und Bainit zu unterdrücken. Nickel hat darüber hinaus einen positiven Einfluss auf die Warmwalzbarkeit, insbesondere, wenn der Stahl Kupfer enthält. Kupfer verschlechtert die Warmwalzbarkeit. Um dem negativen Einfluss von Kupfer auf die Warmwalzbarkeit entgegenzuwirken, können dem Stahl 0,01 Gew.-% Nickel hinzulegiert werden. Aus ökonomischen Gründen sollte der Nickelgehalt auf höchstens 0,4 Gew.-%, insbesondere höchstens 0,10 Gew.-%, beschränkt bleiben.

Kupfer ("Cu") kann optional hinzulegiert werden, um bei Zugaben von mindestens 0,01 Gew.-% die Härtbarkeit zu erhöhen. Darüber hinaus verbessert Kupfer den Widerstand gegen atmosphärische Korrosion unbeschichteter Bleche oder Schnittkanten. Ab einem Gehalt von 0,8 Gew.-% verschlechtert sich die Warmwalzbarkeit aufgrund niedrigschmelzender Cu-Phasen an der Oberfläche deutlich, weshalb der Cu-Gehalt auf höchstens 0,8 Gew.-%, bevorzugt höchstens 0,10 Gew.-%, beschränkt ist.

Molybdän ("Mo") kann zur Verbesserung der Prozessstabilität optional hinzugegeben werden, da es die Ferritbildung deutlich verlangsamt. Ab Gehalten von 0,002 Gew.-% bilden sich dynamisch Molybdän-Kohlenstoff Cluster bis hin zu ultrafeinen Molybdänkarbiden auf den Korngrenzen, welche die Beweglichkeit der Korngrenze und somit diffusive Phasenumwandlungen deutlich verlangsamen. Außerdem wird durch Molybdän die Korngrenzenenergie verringert, was die Nukleationsrate von Ferrit verringert. Aufgrund der hohen Kosten, welche mit einer Legierung von Molybdän verbunden sind, sollte der Gehalt höchstens 1,0 Gew.-%, bevorzugt höchstens 0,1 Gew.-%, betragen.

Wolfram ("W") kann optional in Gehalten von 0,001 - 1,0 Gew.-% zur Verlangsamung der Ferritbildung hinzulegiert werden. Ein positiver Effekt auf die Härtbarkeit ergibt sich bereits bei W-Gehalten von mindestens 0,001 Gew.-%. Aus Kostengründen werden maximal 1,0 Gew.-% Wolfram hinzulegiert.

Der Rest des Stahls eines erfindungsgemäß bereitgestellten Stahlflachprodukts und dementsprechend des daraus durch Warmumformung erhaltenen Blechbauteils wird von Eisen und unvermeidbaren Verunreinigungen eingenommen, wobei zu den unvermeidbaren Verunreinigungen Gehalte von weniger als 0,1 Gew.-% P, von weniger als 0,05 % S und von weniger als 0,01 % N gehören. Die Gehalte an den Verunreinigungen sind dabei jeweils so gering, dass sie keine Wirkung auf die Eigenschaften des Stahls und des daraus erzeugten Blechs haben. Dazu ist die Summe der Gehalte an den Verunreinigungen vorzugsweise auf weniger als 0,2 Gew.-% beschränkt.

Das aus dem so in an sich bekannter Weise zusammengesetzten Stahl bestehende Stahlflachprodukt kann in ebenso bekannter Weise erzeugt werden, wie beispielsweise in dem eingangs erwähnten Stand der Technik beschrieben.

Die Korrosionsschutzbeschichtung, die auf einem zu einem erfindungsgemäßen warmgeformten Stahlflachprodukt und damit einhergehend auf dem erfindungsgemäßen Blechbauteil vorhanden ist, kann aus Reinaluminium oder einer Aluminiumlegierung bestehen. Dementsprechend kann die Korrosionsschutzbeschichtung aus Aluminium bestehen, wobei im Fall, dass es sich bei der Korrosionsschutzschicht um eine Al-Legierungsschicht handelt, dem Hauptbestandteil Al und den technisch unvermeidbaren Verunreinigungen jeweils optional, in Gew.-%, 3 - 15 % Si, 2 - 3,5 % Fe und / oder mindestens einem Erdalkali- oder Übergangsmetall zulegiert sein können, wobei die Gehalte an den Erdalkali- oder Übergangsmetallen in Summe 0,1 - 0,5 % betragen. Der Gehalt an den Verunreinigungen ist dabei typischerweise auf in Summe höchstens 1 Gew.-%, insbesondere höchstens 0,5 Gew.-% bevorzugt höchstens 0,2 Gew.-%, beschränkt.

Der erfindungsgemäß vorgesehene Gehalt an Silizium ("Si") in der Korrosionsschutzschicht führt zu der angestrebten Ausbildung einer Legierungsschicht und gewährleistet eine optimale Haftung und Umformbarkeit des Überzugs. Dieser Effekt kann besonders sicher bei Gehalten von mindestens 7 Gew.-% Si, insbesondere mindestens 9 Gew.-% Si, erzielt werden. Dabei kann die Wirkung von Si im erfindungsgemäß vorgesehenen Korrosionsschutzüberzug bei Gehalten von höchstens 12 Gew.-% Si, insbesondere höchstens 10 Gew.-% Si, besonders effektiv genutzt werden.

Eisen ("Fe") kann im erfindungsgemäß aufgetragenen Korrosionsschutzüberzug in Gehalten von 2 - 3,5 Gew.-% vorhanden sein, um ebenfalls zur Ausbildung der Legierungsschicht beizutragen und die Haftung des Überzugs auf dem jeweiligen Stahlsubstrat des Stahlflachprodukts zu optimieren.

Die Korrosionsschutzschicht kann mindestens ein Erdalkali- oder Übergangmetall in Gehalten von 0,05 - 2 Gew.-% enthalten, um die Ausbildung einer deckenden Oxidschicht im Prozess der Warmumformung zu ermöglichen. Diese Oxidschicht trägt zur Schutzwirkung der auf dem fertig warmumgeformten Bauteil vorhandenen erfindungsgemäß erzeugten Korrosionsschutzschicht bei. Besonders günstig erweist sich die Anwesenheit mindestens eines Erdalkali- und / oder mindestens eines Übergangsmetalls, wenn die Summe der Gehalte an diesen Metallen im Überzug eines erfindungsgemäßen Blechbauteils 0,1 - 0,5 Gew.-%, insbesondere 0,15 - 0,4 Gew. %, beträgt. Von den in Frage kommenden Erdalkalimetallen und Übergangsmetallen haben sich als besonders zielführend Magnesium und Calcium herausgestellt, aber es kann auch Strontium, Barium, Zirkon und Titan verwendet werden.

Grundsätzlich kann zum Auftrag eines erfindungsgemäß vorgesehenen Schutzüberzugs auf das erfindungsgemäß bereitgestellte Stahlflachprodukt jedes Verfahren angewendet werden, mit dem eine Abscheidung von ausreichend dünnen Schichten auf dem Stahlsubstrat möglich ist. Besonders geeignet ist hierzu ein konventionelles Schmelztauchbeschichten ("Feueraluminieren"), das es erlaubt, besonders wirtschaftlich einen Korrosionsschutz auf einem Stahlblech zu erzeugen.

Für die Erfindung wesentlich ist, dass im Arbeitsschritt d) die Deckschicht an der Stelle des Verfahrens, in der es zur Rissbildung in der Korrosionsschutzschicht kommen kann, nämlich im jeweils für das Kaltwalzen eingesetzten Walzgerüst oder zumindest in dessen unmittelbarer Nähe, erzeugt wird.

Die in der erfindungsgemäß applizierten Trägerflüssigkeit enthaltenen Erdalkali- oder Übergangsmetallsalze legen sich als Deckschicht auf der Oberfläche der Korrosionsschutzschicht ab. Bei der Warmumformung erfindungsgemäß beschaffener Stahlflachprodukte zu einem Bauteil kommt es dann in Folge der für die Erwärmung auf die jeweilige Warmumformtemperatur erforderlichen Wärmezufuhr bei gleichzeitigem Vorhandensein von Sauerstoff bzw. Sauerstoff und Wasser (in Form von Luftfeuchte) in der Atmosphäre, unter der die Erwärmung stattfindet, zur Ausbildung eines Oxidfilms. Der Vorteil der erfindungsgemäß ausgewählten Erdalkali- oder Übergangsmetalle besteht dabei darin, dass diese deckende, dichte und sehr kompakte Oxidschichten bilden. Da diese Oxidschicht schon nach einer sehr kurzen Reaktionszeit vorliegt, ist die Oxidation und somit die Möglichkeit der Wasserspaltung zu $H_{dif}$ gestoppt. Bei einer aus Kalzium und/oder Magnesium gebildeten Deckschicht läuft dabei folgende Reaktion mit dem in der Atmosphäre enthaltenem Wasser ab:

$$Mg + H_2O = MgO + 2\ Hdif$$

$$Ca + H_2O = CaO + 2\ Hdif$$

Im Gegensatz dazu würde bei einer freien, nicht in erfindungsgemäßer Weise durch eine Deckschicht abgedeckten Korrosionsschutzschicht auf Al-Basis folgende Reaktion ablaufen:

$$2\,Al + 3\,H_2O = Al_2O_3 + 6\,H_{dif}$$

Bei einer Mg und/oder Ca enthaltenden erfindungsgemäßen Deckschicht entstehen also nur zwei mögliche Wasserstoffatome, die in den Stahl eindringen können, wobei sich gleichzeitig eine abschließende, die Al-Beschichtung schützende Oxidschicht bildet. Dagegen entstehen bei einer bloßliegenden Al-Korrosionsschutzschicht dreimal so viele H-Atome, die zu Schädigungen im Stahlsubstrat führen könnten.

Praktische Untersuchungen haben hier gezeigt, dass durch die erfindungsgemäße Erzeugung die Wasserstoffaufnahme bei der Warmumformung von Stahlflachprodukten der hier in Rede stehenden Art um 10 % bis 50 % gegenüber der Wasserstoffaufnahme von konventionell nur mit einer Al-basierten Korrosionsschutzschicht versehenen Stahlflachprodukten vermindert werden kann. So gelingt es, die Wasserstoffaufnahme bis unter die Nachweisgrenze von 0,05 ppm zu senken.

Ein Vorteil des erfindungsgemäßen Auftrags einer die Deckschicht bildenden Trägerflüssigkeit besteht dabei darin, dass sich die zur Ausbildung der Deckschicht benötigten Elemente direkt an der Oberfläche der Korrosionsschutzschicht befinden und sich auf diese Weise in mögliche Fehlstellen oder Risse der Korrosionsschicht ablegen und dort eine Schutzoxidschicht bilden, die das Stahlsubstrat gegen Oxidation und das Eindringen von Wasserstoff schützen.

Ein weiterer Vorteil der erfindungsgemäßen Applikation der Deckschicht in unmittelbarer Nachbarschaft oder in dem Walzgerüst, in dem das mit der Korrosionsschutzschicht versehene Stahlflachprodukt kaltgewalzt wird, hat den Vorteil, dass die Erdalkali- oder Übergangmetalle während des Walzens in die als Folge des Walzens entstehenden Risse gelangen und dort die Aufnahme von Wasserstoff verhindern. Hierbei werden Bedeckungsgrade von 20 - 100 % der Oberfläche der Korrosionsschutzschicht erreicht, wobei Bedeckungsgrade von bis zu 80 % und mindestens 30 %, insbesondere mindestens 40 %, regelmäßig erreicht werden.

Ein zusätzlicher, an sich bekannter positiver Nebeneffekt einer erfindungsgemäß aufgetragenen Deckschicht besteht darin, dass durch das günstigere Reflektionsverhalten der Deckschicht das Absorptionsverhalten gegenüber Strahlungswärme eines erfindungsgemäß erzeugten Stahlflachprodukts verbessert ist und eine schnellere Aufheizung auf die jeweilige Warmumformtemperatur möglich ist. Darüber hinaus wirkt die erfindungsgemäß aufgebrachte Deckschicht bei der Erwärmung und Warmumformung des Stahlflachprodukts als Trennschicht zwischen der teigigen Aluminiumlegierungsschicht und den Ofenrollen, wodurch die Ofenrollenverschmutzung reduziert wird und die Bildungen von Anbackungen im Umformwerkzeug reduziert ist.

Durch die Erfindung gelingt es somit effektiv, am Ort der Entstehung von Rissen die jeweilige Rissstelledurch eine aus Verbindungen von Erdalkali- oder Übergangsmetallen gebildete Deckschicht aufzutragen, die bei der weiteren Warmverarbeitung durch die rasche Bildung von dünnen und deckenden Erdalkali- oder Übergangsmetallschichten eine Wasserstoffaufnahme verhindert oder zumindest deutlich gegenüber dem Zustand zu verringern, der bei einer bloßliegenden Al-Korrosionsschutzschicht eintreten würde.

Dabei erweist sich die Erfindung als besonders wirksam, wenn das Kaltwalzen (Arbeitsschritt c)) als so genanntes "Flexibles Walzen" oder "Partielles Walzen" durchgeführt wird, bei dem das mit der Korrosionsschutzschicht versehene Stahlflachprodukt eine über seine Länge und / oder Breite variierende Dicke erhält. Die Grundlagen dieser Walzverfahren sind beispielsweise in der Präsentation "Flexible Rolling of Tailor Rolled Blanks - innovative light weight design in steel -" erläutert, welche unter der URL "https://www.autosteel.org/-/media/files/autosteel/great-designs-in-steel/gdis-2006/14---flexible-rolling-of-tailor-rolled-blanks.ashx" (aufgefunden am 2. August 2019) einsehbar ist. Insbesondere im Bereich des Übergangs zwischen den unterschiedlich dicken Bereichen besteht beim flexiblen Walzen die Gefahr der Rissbildung in der Korrosionsschutzschicht auf Al-Basis.

Dabei liegt das Auflagengewicht der erfindungsgemäß erzeugten Deckschicht bei 10 - 500 mg/m². Eine in dieser Stärke auf die Korrosionsschutzschicht aufgetragene Deckschicht ist einerseits dick genug, um effektiv das Eindringen von Wasserstoff in den Korrosionsschutzüberzug zu behindern. Andererseits ist die erfindungsgemäß erzeugte Deckschicht so dünn, dass sie die Verarbeitungseigenschaften eines erfindungsgemäß erzeugten Stahlflachprodukts nicht beeinträchtigen und insbesondere eine nach wie vor gute Schweißbarkeit, Klebehaftung und Lackhaftung auch an einem aus einem erfindungsgemäß erzeugten Stahlflachprodukt erfindungsgemäß geformten Bauteil gewährleisten kann. Als besonders günstig erweisen sich hierbei Auflagengewichte von bis zu 150 mg/m², wie beispielsweise 20 - 100 mg/m², insbesondere 30 - 80 mg/m². Bei Auflagengewichten von weniger als 10 mg/m² würde keine ausreichende Bedeckung vorliegen, um zu gewährleisten, dass sich bei der Erwärmung auf die Warmumformtemperatur und bei der Warmumformung eine ausreichend dichte Oxidschicht aus der erfindungsgemäß zuvor erzeugten Deckschicht bildet.

Beträgt das Auflagengewicht der Deckschicht mehr als 500 mg/m², kann es aufgrund der ihr eigenen Festigkeit zum Abblättern der Deckschicht kommen. Dies kann sich besonders negativ auswirken, wenn das mit einer derart dicken Deckschicht belegte Stahlflachprodukt zu einem Coil gewickelt oder von einem Coil abgewickelt werden soll. Darüber hinaus würde sich eine Deckschicht mit zu hohem Auflagengewicht nachteilig auf alle Weiterverarbeitungsschritte des erfindungsgemäß warmgeformten Bauteils auswirken, insbesondere die Schweißeignung, die Klebhaftung und die Lackierergebnisse beeinträchtigen. Diese negativen Effekte können besonders sicher dadurch vermieden werden, dass das Auflagengewicht der Deckschicht vorzugsweise auf höchstens 400 mg/mm², insbesondere höchstens 200 mg/mm² oder höchstens 150 mg/mm², beschränkt wird.

Die erfindungsgemäß für die Abscheidung der Deckschicht auf die Korrosionsschutzschicht des Stahlflachprodukts aufgebrachte Trägerflüssigkeit kann beispielsweise eine wässrige Lösung, eine Dispersion oder eine Emulsion sein, die zusätzlich zu der in konventioneller Weise im Bereich eines Walzgerüstes beim Kaltwalzen aufgebrachten Walzemulsion auf das kaltzuwalzende Stahlflachprodukt aufgetragen wird. Dabei kann die Trägerflüssigkeit einen Netzwerkbildner und / oder ein Benetzungsmittel enthalten, um die Entstehung einer dicht deckenden, gleichmäßig auf der Oberfläche der Korrosionsschutzschicht verteilten Deckschicht zu begünstigen.

Es ist jedoch auch möglich, als Trägerflüssigkeit, die im Arbeitsschritt d) zur Bildung der Deckschicht auf das Stahlflachprodukt aufgebracht wird, eine an sich bekannte Walzemulsion, die ein Walzöl enthält, durch Zugabe von mindestens einer der erfindungsgemäß ausgewählten Verbindungen eines Erdalkali- oder Übergangsmetalls so zu modifizieren, dass die Walzemulsion nicht nur die Reibbedingungen zwischen den Walzen und dem Stahlflachprodukt im Walzspalt des Walzgerüsts verbessert, sondern dass sich gleichzeitig aus der Walzemulsion auch die erfindungsgemäß angestrebte Deckschicht abscheidet. Hierzu kann die so modifizierte Walzemulsion in an sich bekannter Weise im Einlaufbereich oder im Walzspalt des Walzgerüsts auf das Stahlflachprodukt aufgebracht werden.

Insbesondere im Fall, dass als Trägerflüssigkeit eine wässrige Lösung eingesetzt wird, in der die jeweilige Verbindung des erfindungsgemäß hierzu vorgesehenen Übergangs- oder Erdalkalimetalls gelöst ist, sollte dafür gesorgt werden, dass vor dem Wickeln des erfindungsgemäß erzeugten Stahlflachprodukts zu einem Coil keine Flüssigkeitsrückstände mehr auf der Oberfläche des Stahlflachprodukts verbleiben, die einen korrosiven Angriff auslösen oder den Ausgangspunkt für eine weitere Entstehung von freiem Wasserstoff bilden könnten, der in das Stahlflachprodukt eindringt. Um dies zu verhindern, kann das Stahlflachprodukt vor dem Haspeln zu einem Coil bei Temperaturen von 100 - 250 °C, bevorzugt 100 - 180 °C, getrocknet werden. Typische hierzu geeignete Trocknungszeiten liegen bei > 0 s bis 300 s, insbesondere 10 - 60 s.

Deckschichten mit Auflagengewichten, wie sie von der Erfindung vorgegeben sind, lassen sich mit Trägerflüssigkeiten erzeugen, in denen die erfindungsgemäß vorgesehene mindestens eine Verbindung eines Erdalkali- oder Übergangsmetalls in einer Konzentration von 10 g/l bis 700 g/l vorliegt, wobei sich Konzentrationen von bis zu 500 g/l, insbesondere bis zu 200 g/l, als besonders praxisgerecht herausgestellt haben. Die genannten Konzentrationsbereiche erweisen sich insbesondere dann als günstig, wenn die Trägerflüssigkeit eine wässrige Lösung ist. Dabei haben sich Konzentrationen von 20 - 90 g/l, insbesondere 30 - 80 g/l oder 30 - 70 g/l, bei praktischen Versuchen als besonders tauglich erwiesen.

Die erfindungsgemäß in der Deckschicht eines erfindungsgemäß erzeugten Stahlflachprodukts vorhandenen Erdalkali- oder Übergangsmetalle liegen in der Trägerflüssigkeit als Sulfate, Phosphate und Nitrate oder in oxidischer Form als Dispersion von Erdalkalimetall-Oxid-Partikeln vor. Chloride sollten aufgrund des möglichen korrosiven Angriffes nicht verwendet werden. Bei Verwendung von Silikaten der Erdalkali- oder Übergangsmetalle würde die Gefahr bestehen, dass die sich daraus bildende Siliziumverbindung das Verhalten des Stahlflachprodukts bei seiner Weiterverarbeitung verschlechtert. Jegliche Fluorverbindungen müssen ebenfalls vermieden werden, da diese im Warmumformofen zu Flusssäure reagieren können und sowohl Mensch wie Maschine schaden würden.

Als für die erfindungsgemäßen Zwecke geeignet hat es sich erwiesen, wenn in der Trägerflüssigkeit Verbindungen von Magnesium (Mg), Kalzium (Ca), Beryllium (Be), Calcium (Ca), Strontium (Sr) oder Barium (Ba) vorhanden sind, wobei sich Mg- und / oder Ca-Verbindungen für die erfindungsgemäßen Zwecke als besonders günstig herausgestellt haben. Die jeweiligen Verbindungen können dabei einzeln oder in Kombination in der Trägerflüssigkeit vorhanden sein. So kann die Trägerflüssigkeit Verbindungen von zwei oder mehr Erdalkali- oder Übergangsmetallen enthalten. Zusätzlich können, wie schon erwähnt, dem Lösungs- bzw. Trägermittel der Trägerflüssigkeit auch ein Netzwerkbildner, wie z.B. Bismutnitrat, oder ein Benetzungsmittel, beispielsweise ein Tensid, zugegeben werden.

Einschließlich ihrer Korrosionsschutzschicht und ihrer Deckschicht weisen erfindungsgemäß erzeugte Stahlflachprodukte Blechdicken von typischerweise 0,6 - 6 mm, insbesondere 0,8 - 3,8 mm, auf, wobei Blechdicken von 1 - 3,5 mm, insbesondere 1,2 - 3,5 mm, besonders praxisgerecht sind.

Die Erfindung nennt ein Verfahren zur Erzeugung eines mit einer Korrosionsschutzbeschichtung auf Basis von Al versehenen, für die Warmformgebung geeigneten Stahlflachprodukts, bei dem die Gefahr der Entstehung von wasserstoffinduzierten Rissen bei einer Warmumformung minimiert ist. Hierzu wird erfindungsgemäß ein Stahlflachprodukt bereitgestellt, das, in Gew.-%, aus C: 0,1 - 0,4 %, Si: 0,05 - 0,5 %, Cr: 0,005 - 1,0 %, Mn: 0,5 - 3,0 %, B: 0,0005 - 0,01 %, sowie jeweils optional aus V: 0,001 - 0,2 %, Ti: 0,001 - 0,1 %, Nb: 0,001 - 0,1 %, Al: 0,01 - 0,2 %, Ni: 0,01 - 0,4 %, Cu: 0,01 - 0,8 %, Mo: 0,002 - 1,0 %, W: 0,001 - 1,0 %, und als Rest aus Eisen und unvermeidbaren Verunreinigungen besteht. Das Stahlflachprodukt wird mit einer Korrosionsschutzbeschichtung beschichtet, die aus Al und unvermeidbaren Verunreinigungen sowie optionalen Zulegierungen von, in Gew.-%, jeweils 3 - 15 % Si, 2 - 3,5 % Fe und/oder in Summe 0,05 - 2 % mindestens eines Erdalkali- und Übergangsmetalls aus der Gruppe "Mg, Ca, Sr, Ba, Zr und Ti" besteht. Während des Kaltwalzens des mit der Korrosionsschutzbeschichtung versehenen Stahlflachprodukts in einem Walzgerüst wird im Bereich des Einlaufs, Walzspalts oder Auslaufs des Walzgerüsts eine Trägerflüssigkeit auf die Korrosionsschutzschicht aufgetragen, die mindestens eine als Sulfat, Nitrat, Phosphat oder Oxid vorliegende Verbindung eines Erdalkali- oder Übergangsmetalls enthält, um eine Deckschicht mit einem Auflagengewicht von 10 - 500 mg/m$^2$ zu bilden, die 20 - 100 % der Oberfläche der Korrosionsschutzschicht bedeckt.

Ein erfindungsgemäß erzeugtes, durch Warmumformen erhaltenes Bauteil weist folglich ein Stahlsubstrat auf, das aus, in Gew.-%, C: 0,1 - 0,4 %, Si: 0,05 - 0,5 %, Cr: 0,005 - 1,0 %, Mn: 0,5 - 3,0 %, B: 0,0005 - 0,01 %, sowie jeweils optional einem oder mehreren der in der Gruppe "V, Ti, Nb, Al, Ni, Cu, Mo, W" zusammengefassten Legierungselemente mit der Maßgabe, dass die Gehalte an dem jeweils optional vorhandenen Legierungselement wie folgt zu bemessen sind: V: 0,001 - 0,2 %, Ti: 0,001 - 0,1 %, Nb: 0,001 - 0,1 %, Al: 0,01 - 0,2 %, Ni: 0,01 - 0,4 %, Cu: 0,01 - 0,8 %, Mo: 0,002 - 1,0 %, W: 0,001 - 1,0 %, und als Rest aus Eisen und unvermeidbaren Verunreinigungen besteht, wobei zu den unvermeidbaren Verunreinigungen Gehalte von weniger als 0,1 % P, von weniger als 0,05 % S und von weniger als 0,01 % N gehören und der Gesamtgehalt an Verunreinigungen vorzugsweise auf weniger als 0,2 Gew.-% beschränkt ist. Auf dem Stahlsubstrat ist eine Korrosionsschutzschicht vorhanden, die aus Aluminium und unvermeidbaren Verunreinigungen sowie optionalen Zulegierungen von, in Gew.-%, jeweils 3 - 15 % Si, 2 - 3,5 % Fe und/oder in Summe 0,05 - 2 % mindestens eines Erdalkali- und Übergangsmetalls aus der Gruppe "Mg, Ca, Sr, Ba, Zr und Ti" besteht. Auf der Korrosionsschutzschicht liegt eine Deckschicht, die aus Oxiden mindestens eines Erdalkali- oder Übergangsmetalls besteht, wobei die derart auf der Korrosionsschutzschicht erzeugte Deckschicht ein Auflagengewicht von 10 - 500 mg/m$^2$ aufweist und 20 - 100 % der Oberfläche der Korrosionsschutzschicht bedeckt.

Nachfolgend wird die Erfindung anhand von Ausführungsbeispielen näher erläutert.

Für einen ersten Versuch wurde ein 2,85 mm dickes, in konventioneller Weise erzeugtes Stahlflachprodukt mit der in Tabelle 1 angegebenen Zusammensetzung bereitgestellt.

Das Stahlflachprodukt wurde in konventioneller Wese durch Schmelztauchbeschichten mit einer Korrosionsschutzschicht versehen. Dazu ist das Stahlflachprodukt durch ein Schmelzenbad geleitet worden, das aus 9,5 % Silizium, 1 % Eisen und 0,3 % Magnesium und als Rest aus Aluminium und unvermeidbare Verunreinigungen bestand.

Das so mit einer Korrosionsschutzschicht auf Aluminium-Basis beschichtete Stahlflachprodukt ist in einem Kaltwalzprozess partiell gewalzt worden und hat dabei drei Breitenabschnitte mit einer Breite von jeweils 30 cm erhalten. Im Bereich des ersten Breitenabschnitts betrug die Dicke des Stahlflachprodukts 2,25 mm, im Bereich des daneben liegenden zweiten Breitenabschnitts 1,75 mm und im Bereich des daneben liegenden dritten Breitenabschnitts 1,35 mm.

Um einerseits die Gefahr einer Beschädigung der Arbeitswalzen des Walzgerüstes, in dem das partielle Kaltwalzen durchgeführt worden ist, und des Stahlflachprodukts zu minimieren, und andererseits eine Deckschicht der erfindungsgemäß vorgesehenen Art auf dem Stahlflachprodukt zu erzeugen, wurde im Einlauf des Walzgerüsts eine Trägerflüssigkeit auf das Stahlflachprodukt aufgebracht, die aus einer Walzemulsion bestand, welche neben den für solche Walzemulsionen im Stand der Technik üblichen Bestandteilen zusätzlich 50 g/l Magnesiumnitrat enthielt.

Um die Entstehung der Deckschicht zusätzlich zu forcieren, wurde ebenfalls in Laufrichtung des Stahlflachprodukts vor dem Walzgerüst mittels einer konventionellen Spritzeinrichtung eine Trägerflüssigkeit in Form einer wässrigen Lösung aufgebracht, bei der 50 g/l Magnesiumnitrat in Wasser gelöst waren.

Durch diese Art der Applikation wurde erreicht, dass sich eine Magnesium enthaltene Deckschicht auf der Korrosionsschutzschicht genau dort gebildet hat, wo im Walzprozess bereits kleinste Beschädigungen aufgetreten sind.

Anschließend sind von dem Stahlflachprodukt Zuschnitte abgeteilt worden, die zum Austenitisieren in einem Ofen in konventioneller Weise unter Umgebungsatmosphäre auf eine Warmumformtemperatur von 840 - 950 °C, insbesondere 930 °C, über eine Dauer von bis zu 1 - 600 s erwärmt und anschließend in einem konventionellen Umformwerkzeug zu einem Bauteil warmgeformt worden sind. Die dabei eintretende Wasserstoffaufnahme des Stahlflachprodukts wurde um 20 % gegenüber solchen warmumgeformten Stahlflachprodukten verringert, die eine gleiche Zusammensetzung und Al-Beschichtung aufwiesen.

Für fünf Versuche wurden fünf in konventioneller Weise erzeugte, ebenfalls jeweils 1,5 mm dicke Stahlflachprodukte bereitgestellt, die aus Stählen A - E bestanden, deren Zusammensetzung in Tabelle 2 angegeben ist.

Proben V1 - V5 dieser Stahlflachprodukte wurden in konventioneller Weise mit unterschiedlichen Korrosionsschutzüberzügen auf Al-Basis schmelztauchbeschichtet. Die Zusammensetzung der dafür verwendeten Schmelzenbäder A1 - A4 ist in Tabelle 3 angegeben. In Tabelle 4 ist zu den Proben V1 - V5 verzeichnet, aus welchem der Stähle A - E sie bestanden, welches Schmelzenbad sie durchlaufen haben und welches Auflagengewicht AG_K ihre Korrosionsschutzschicht aufwies.

Die so beschichteten Proben V1 - V5 sind einem Kaltwalzprozess unterzogen worden, bei dem sie auf eine Blechdicke BD kaltgewalzt worden sind.

Im Bereich des Einlaufs des dazu eingesetzten Walzgerüstes ist auf die Proben V1 - V5 jeweils eine Trägerflüssigkeit aufgebracht worden, die neben dem jeweiligen Lösungs- oder Dispergierungsmittel jeweils 50 g/l Mg-Nitrat enthielt.

An den fertig kaltgewalzten Proben V1 - V5 ist das Auflagengewicht AG_D und der Bedeckungsgrad BG der auf ihnen aus der Trägerflüssigkeit gebildeten Deckschicht ermittelt worden.

In Tabelle 4 sind das jeweilige Lösungs- bzw. Dispersionsmittel L/D der Trägerflüssigkeit, das Auflagengewicht AG_D, die Blechdicke BD nach dem Kaltwalzen und der Bedeckungsgrad BG für die Versuche V1 - V5 ebenfalls angegeben.

Von den Proben V1 - V5 sind Zuschnitte abgeteilt worden, die über eine Dauer von jeweils 5 min unter einer Glühatmosphäre, deren Taupunkt +15 °C betrug, auf eine Warmumformtemperatur von 925 °C erwärmt worden sind. Die so durcherwärmten Zuschnitte sind anschließend in einem konventionellen Warmumformwerkzeug in konventioneller Weise zu Bauteilen umgeformt worden.

Anschließend ist der Gehalt des im Stahlsubstrat des jeweils nach der Warmumformung erhaltenen Bauteils vorhandenen diffusiblen Wasserstoffs H_dif ermittelt worden. Ebenso sind die Schweißeignung der Bauteile gemäß SEP 1220-2 (Stand 2011) ermittelt und der Bruchflächenanteil bei einer Verklebung mittels des Strukturklebstoffs Betamate 1485-S, der von DOW Chemicals angeboten wird (s. EG-Sicherheitsdatenblatt zu dem Produkt BM 1485S Base-Material, herausgegeben von der Dow Chemical Company Ltd, Stand 2012/05/11, Druckdatum 23. Mai 2012), gemäß SEP 1220-S in der vorläufigen Fassung von 2016 sowie die Lackhaftung gemäß DIN ISO 20567-1B+C ermittelt worden. Das Ergebnis dieser Untersuchungen ist in Tabelle 5 zusammengefasst.

Angaben in Gew.-%, Rest Eisen und unvermeidbare Verunreinigungen Tabelle 1

| C | Si | Mn | P | S | Al | Ti | B |
|------|-------|-----|-------|-------|-------|------|-------|
| 0,24 | 0,035 | 1,3 | 0,020 | 0,008 | 0,010 | 0,04 | 0,005 |

Angaben in Gew.-%, Rest Eisen und unvermeidbare Verunreinigungen Tabelle 2

| Stahl | C | Si | Mn | P | S | Al | Nb | Ti | B |
|-------|-------|------|------|-------|-------|-------|------|-------|-------|
| A | 0,21 | 0,38 | 1,22 | 0,02 | 0,009 | 0,015 | | 0,05 | 0,005 |
| B | 0,225 | 0,35 | 1,15 | 0,023 | 0,010 | 0,012 | | 0,045 | 0,004 |
| C | 0,21 | 0,37 | 1,23 | 0,022 | 0,008 | 0,013 | | 0,047 | 0,005 |
| D | 0,23 | 0,35 | 1,32 | 0,02 | 0,008 | 0,010 | - | 0,04 | 0,004 |
| E | 0,08 | 0,30 | 0,09 | 0,028 | 0,023 | 0,010 | 0,08 | 0,013 | 0,004 |

Angaben in Gew.-%, Rest Aluminium und unvermeidbare Verunreinigungen Tabelle 3

| Überzug | Si | Fe | Mg |
|---------|-----|-----|-----|
| A1 | 9,4 | 3,1 | - |
| A2 | 8,5 | 3,5 | - |
| A3 | 9,9 | 2,9 | - |
| A4 | 8,8 | 2,8 | 0,2 |

Tabelle 4

| Probe | Stahl | Überzug | AG_K [g/m$^2$] | BD [mm] | L/D | AG_D [g/m$^2$] | BG [%] |
|-------|-------|---------|------|---------|--------|------|------|
| V1 | C | A2 | 40 | 1,25 | Wasser | 50 | 35 |
| V2 | D | A1 | 45 | 1,4 | Öl | 70 | 40 |
| V3 | A | A3 | 70 | **1,5** | Wasser | 50 | 50 |

(fortgesetzt)

| Probe | Stahl | Überzug | AG_K [g/m²] | BD [mm] | L/D | AG_D [g/m²] | BG [%] |
|-------|-------|---------|-------------|---------|--------|-------------|--------|
| V4 | B | A1 | 80 | 1,0 | Öl | 70 | 55 |
| V5 | E | A4 | 70 | 1,25 | Wasser | 50 | 48 |

Tabelle 5

| Probe | H_Dif [ppm] | Schweißeignung [kA] | Bruchflächenanteil [%] | Lackhaftung |
|-------|-------------|---------------------|------------------------|-------------|
| 1 | 0,19 | 1,1 | 85 | GT 0 |
| 2 | 0,15 | 1,0 | 80 | GT 1 |
| 3 | 0,12 | 1,0 | 78 | GT 1 |
| 4 | 0,20 | 1,1 | 83 | GT 0 |
| 5 | 0,1 | 1,1 | 83 | GT 0 |

**Patentansprüche**

1.  Verfahren zum Herstellen eines mit einem Schutzüberzug auf Al-Basis versehenen Stahlflachprodukts mit verminderter Anfälligkeit für die Aufnahme von Wasserstoff, umfassend folgende Arbeitsschritte:

    a) Bereitstellen eines Stahlflachprodukts, das, in Gew.-%, aus

    C: 0,1 - 0,4 %,
    Si: 0,05 - 0,5 %,
    Cr: 0,005 - 1,0 %,
    Mn: 0,5 - 3,0 %,
    B: 0,0005 - 0,01 %,
    sowie jeweils optional einem oder mehreren der in der Gruppe "V, Ti, Nb, Al, Ni, Cu, Mo, W" zusammengefassten Legierungselemente mit der Maßgabe, dass die Gehalte an dem jeweils optional vorhandenen Legierungselement wie folgt zu bemessen sind:

    V: 0,001 - 0,2 %,
    Ti: 0,001 - 0,1 %,
    Nb: 0,001 - 0,1 %,
    Al: 0,01 - 0,2 %,
    Ni: 0,01 - 0,4 %,
    Cu: 0,01 - 0,8 %,
    Mo: 0,002 - 1,0 %,
    W: 0,001 - 1,0 %,
    und als Rest aus Eisen und unvermeidbaren Verunreinigungen besteht, wobei zu den unvermeidbaren Verunreinigungen Gehalte von weniger als 0,1 % P, von weniger als 0,05 % S und von weniger als 0,01 % N gehören;

    b) Beschichten des Stahlflachprodukts mit einer Korrosionsschutzbeschichtung, die aus Aluminium und unvermeidbaren Verunreinigungen sowie optionalen Zulegierungen von, in Gew.-%, jeweils 3 - 15 % Si, 2 - 3,5 % Fe und/oder in Summe 0,05 - 2 % mindestens eines Erdalkali- und Übergangsmetalls aus der Gruppe "Mg, Ca, Sr, Ba, Zr und Ti" besteht;
    c) Kaltwalzen des mit der Korrosionsschutzbeschichtung versehenen Stahlflachprodukts in einem Walzgerüst;
    d) Erzeugen einer Deckschicht auf der Korrosionsschutzschicht, indem im Bereich des Einlaufs, des Walzspalts oder des Auslaufs des Walzgerüsts eine Trägerflüssigkeit auf die Korrosionsschutzschicht des Stahlflachprodukts aufgetragen wird, die mindestens eine als Sulfat, Nitrat, Phosphat oder Oxid vorliegende Verbindung eines Erdalkali- oder Übergangsmetalls enthält, wobei die derart auf der Korrosionsschutzschicht erzeugte Deckschicht ein Auflagengewicht von 10 - 500 mg/m² aufweist und 20 - 100 % der Oberfläche der Korrosionsschutzschicht bedeckt.

2. Verfahren nach Anspruch 1, **dadurch gekennzeichnet, dass** die in der Deckschicht enthaltene mindestens eine Verbindung eines Erdalkali- oder Übergangsmetalls ein Sulfat, Nitrat, Phosphat oder Oxid von Magnesium, Kalzium, Beryllium (Be), Calcium (Ca), Strontium (Sr) oder Barium (Ba) ist.

3. Verfahren nach einem der voranstehenden Ansprüche, **dadurch gekennzeichnet, dass** die Deckschicht Verbindungen von mindestens zwei oder mehr Erdalkali- oder Übergangsmetallen enthält.

4. Verfahren nach einem der voranstehenden Ansprüche, **dadurch gekennzeichnet, dass** die Deckschicht aus einer Trägerflüssigkeit abgeschieden wird, in der die mindestens eine Verbindung eines Erdalkali- oder Übergangsmetalls in einer Konzentration von 10 g/l bis 700 g/l vorliegt.

5. Verfahren nach einem der voranstehenden Ansprüche, **dadurch gekennzeichnet, dass** die Trägerflüssigkeit eine wässrige Lösung, eine Dispersion oder eine Emulsion ist.

6. Verfahren nach einem der voranstehenden Ansprüche, **dadurch gekennzeichnet, dass** die Trägerflüssigkeit einen Netzwerkbildner und / oder ein Benetzungsmittel enthält.

7. Verfahren nach einem der voranstehenden Ansprüche, **dadurch gekennzeichnet, dass** im Arbeitsschritt b) die Korrosionsschutzbeschichtung durch Schmelztauchbeschichten aufgetragen wird.

8. Verfahren nach einem der voranstehenden Ansprüche, **dadurch gekennzeichnet, dass** das Stahlflachprodukt nach der Erzeugung der Deckschicht (Arbeitsschritt d)) eine Trocknungseinrichtung zum Trocknen der Deckschicht durchläuft.

9. Verfahren nach einem der voranstehenden Ansprüche, **dadurch gekennzeichnet, dass** das Kaltwalzen (Arbeitsschritt c)) als flexibles Walzen durchgeführt wird, bei dem das Stahlflachprodukt eine über seine Länge und/oder Breite variierende Dicke erhält.

10. Verfahren nach einem der voranstehenden Ansprüche, **dadurch gekennzeichnet, dass** die Trägerflüssigkeit, die im Arbeitsschritt d) zur Bildung der Deckschicht auf das Stahlflachprodukt aufgebracht wird, eine Walzemulsion ist, die ein Walzöl sowie zusätzlich die mindestens eine Verbindung des Erdalkali- oder Übergangsmetalls enthält, die die Deckschicht bildet, und zur Verbesserung der Reibbedingungen zwischen den Walzen und dem Stahlflachprodukt im Einlauf oder im Walzspalt des Walzgerüsts auf das Stahlflachprodukt aufgebracht wird.

11. Verfahren zum Herstellen eines Bauteils durch Warmumformen eines mit einer Korrosionsschutzbeschichtung auf Aluminium-Basis versehenen Stahlflachprodukts umfassend folgende Arbeitsschritte:

i) Erzeugen eines Stahlflachprodukts durch Anwendung des Verfahrens nach einem der voranstehenden Ansprüche;
ii) Abteilen eines Zuschnitts von dem Stahlflachprodukt;
iii) Erwärmen des Zuschnitts auf eine Warmumformtemperatur von 840 - 950 °C;
iv) Umformen des auf die Warmumformtemperatur erwärmten Zuschnitts zu dem Bauteil.

**Claims**

1. Method for producing a flat steel product provided with an Al-based protective coating and having reduced susceptibility to absorption of hydrogen, comprising unit operations as follows:

a) providing a flat steel product which in wt% consists of

C: 0.1-0.4%,
Si: 0.05-0.5%,
Cr: 0.005-1.0%,
Mn: 0.5-3.0%,
B: 0.0005-0.01%,

and also in each case optionally one or more of the alloy elements collected in the group "V, Ti, Nb, Al, Ni, Cu, Mo, W", with the proviso that the amounts of each optionally present alloy element are as follows:

V: 0.001-0.2%,
Ti: 0.001-0.1%,
Nb: 0.001-0.1%,
Al: 0.01-0.2%,
Ni: 0.01-0.4%,
Cu: 0.01-0.8%,
Mo: 0.002-1.0%,
W: 0.001-1.0%,

and consists, as the balance, of iron and unavoidable impurities, with the unavoidable impurities including amounts of less than 0.1% P, of less than 0.05% S and of less than 0.01% N;

b) coating the flat steel product with an anti-corrosion coating which consists of aluminium and unavoidable impurities and also optional alloy additions of, in wt%, in each case 3-15% Si, 2-5.5% Fe and/or in total 0.05-2% at least one alkaline earth metal and transition metal from the group "Mg, Ca, Sr, Ba, Zr and Ti";
c) cold rolling the flat steel product provided with the anti-corrosion coating, in a rolling stand;
d) generating an outer layer on the anti-corrosion layer, by applying a carrier liquid to the anti-corrosion layer of the flat steel product in the region of the entry, the roll nib or the exit of the rolling stand, the liquid comprising at least one alkaline earth or transition metal compound in the form of sulphate, nitrate, phosphate or oxide, with the outer layer thus generated on the anti-corrosion layer having an applied weight of 10-500 mg/m$^2$ and covering 20-100% of the surface of the anti-corrosion layer.

2. Method according to Claim 1, **characterized in that** the at least one alkaline earth or transition metal compound in the outer layer is a sulphate, nitrate, phosphate or oxide of magnesium, calcium, beryllium (Be), calcium (Ca), strontium (Sr) or barium (Ba).

3. Method according to either of the preceding claims, **characterized in that** the outer layer comprises compounds of at least two or more alkaline earth or transition metals.

4. Method according to any of the preceding claims, **characterized in that** the outer layer is deposited from a carrier liquid in which the at least one compound of an alkaline earth or transition metal is present at a concentration of 10 g/l to 700 g/l.

5. Method according to any of the preceding claims, **characterized in that** the carrier liquid is an aqueous solution, a dispersion or an emulsion.

6. Method according to any of the preceding claims, **characterized in that** the carrier liquid comprises a network former and/or a wetting agent.

7. Method according to any of the preceding claims, **characterized in that** in unit operation b) the anti-corrosion coating is applied by hot dip coating.

8. Method according to any of the preceding claims, **characterized in that** the flat steel product after the generation of the outer layer (unit operation d)) passes through a drying facility for drying the outer layer.

9. Method according to any of the preceding claims, **characterized in that** the cold rolling (unit operation c)) is carried out as flexible rolling, in which the flat steel product acquires a thickness which varies over its length and/or width.

10. Method according to any of the preceding claims, **characterized in that** the carrier liquid which is applied in unit operation d) to the flat steel product to form the outer layer is a rolling emulsion which comprises a rolling oil and also, additionally, the at least one alkaline earth or transition metal compound which forms the outer layer, and, for improving the frictional conditions between the rolls and the flat steel product, is applied to the flat steel product in the entry or in the roll nib of the rolling stand.

11. Method for producing a component by hot forming a flat steel product provided with an aluminium-based anti-corrosion coating, comprising unit operations as follows:

i) generating a flat steel product by employing the method according to any of the preceding claims;
ii) dividing off a blank from the flat steel product;
iii) heating the blank to a hot forming temperature of 840-950°C;
iv) forming the blank heated to the hot forming temperature to give the component.

**Revendications**

1.  Procédé de fabrication d'un produit plat en acier pourvu d'un revêtement protecteur à base d'Al, doté d'une sensibilité réduite pour l'absorption d'hydrogène, comprenant les étapes de travail :

    a) fourniture d'un produit plat en acier qui est constitué, en % en poids, de

    C: 0,1 à 0,4 %,
    Si: 0,05 à 0,5 %,
    Cr: 0,005 à 1,0 %,
    Mn: 0,5 à 3,0 %,
    B: 0,0005 à 0,01 %,
    ainsi qu'à chaque fois éventuellement un ou plusieurs des éléments d'alliage rassemblés dans le groupe « V, Ti, Nb, Al, Ni, Cu, Mo, W » à la condition que les teneurs en élément d'alliage à chaque fois éventuellement présent doivent être mesurées comme suit:

    V: 0,001 à 0,2 %,
    Ti: 0,001 à 0,1 %,
    Nb: 0,001 à 0,1 %,
    Al: 0,01 à 0,2 %,
    Ni: 0,01 à 0,4 %,
    Cu: 0,01 à 0,8 %,
    Mo: 0,002 à 1,0,
    W: 0,001 à 1,0 %,
    et, comme reste, de fer et d'impuretés inévitables, dans lequel des teneurs de moins de 0,1 % de P, moins de 0,05 % de S et moins de 0,01 % de N appartiennent aux impuretés inévitables;

    b) revêtement du produit plat en acier par un revêtement de protection contre la corrosion, qui est constitué d'aluminium et d'impuretés inévitables ainsi que d'alliages éventuels de, en % en poids, à chaque fois 3 à 15 % de Si, 2 à 3,5 % de Fe et/ou au total 0,05 à 2 % d'au moins un métal alcalino-terreux ou de transition du groupe « Mg, Ca, Sr, Ba, Zr et Ti »;
    c) laminage à froid du produit plat en acier pourvu du revêtement de protection contre la corrosion dans une cage de laminage;
    d) génération d'une couche de couverture sur la couche anticorrosion en appliquant sur la couche anticorrosion du produit plat en acier, dans la zone de l'entrée, de la fente de laminage ou de la sortie de la cage de laminage, un liquide porteur qui contient au moins un composé présent en tant que sulfate, nitrate, phosphate ou oxyde d'un métal alcalino-terreux ou de transition, la couche de couverture générée de telle manière sur la couche anticorrosion présentant un poids appliqué de 10 à 500 mg/m$^2$ et recouvrant 20 à 100 % de la surface de la couche anticorrosion.

2.  Procédé selon la revendication 1, **caractérisé en ce que** l'au moins un composé d'un métal alcalino-terreux ou de transition contenu dans la couche de couverture est un sulfate, nitrate, phosphate ou oxyde de magnésium, de calcium, de béryllium (Be), de calcium (Ca), de strontium (Sr) ou de baryum (Ba).

3.  Procédé selon l'une quelconque des revendications précédentes, **caractérisé en ce que** la couche de recouvrement contient des composés d'au moins deux métaux alcalino-terreux ou de transition ou plus.

4.  Procédé selon l'une quelconque des revendications précédentes, **caractérisé en ce que** la couche de recouvrement est déposée à partir d'un liquide porteur dans lequel l'au moins un composé d'un métal alcalino-terreux ou de transition est présent en une concentration de 10 g/l à 700 g/l.

5.  Procédé selon l'une quelconque des revendications précédentes, **caractérisé en ce que** le liquide porteur est une solution aqueuse, une dispersion ou une émulsion.

6. Procédé selon l'une quelconque des revendications précédentes, **caractérisé en ce que** le liquide porteur contient un agent de réticulation et/ou un agent mouillant.

7. Procédé selon l'une quelconque des revendications précédentes, **caractérisé en ce que** dans l'étape de travail b) le revêtement anticorrosion est appliqué par revêtement par immersion en masse fondue.

8. Procédé selon l'une quelconque des revendications précédentes, **caractérisé en ce que** le produit plat en acier traverse, après la génération de la couche de couverture (étape de travail d)), un dispositif de séchage pour le séchage de la couche de couverture.

9. Procédé selon l'une quelconque des revendications précédentes, **caractérisé en ce que** le laminage à froid (étape de travail c)) est réalisé en tant que laminage flexible, dans lequel le produit plat en acier obtient une épaisseur variant dans sa longueur et/ou sa largeur.

10. Procédé selon l'une quelconque des revendications précédentes, **caractérisé en ce que** le liquide porteur qui est appliqué dans l'étape de travail d) pour la formation de la couche de couverture sur le produit plat en acier est une émulsion de laminage qui contient une huile de laminage ainsi que de plus l'au moins un composé du métal alcalino-terreux ou de transition, qui forme la couche de couverture, et est appliquée sur le produit plat en acier, pour l'amélioration des conditions de friction entre les rouleaux et le produit plat en acier dans l'entrée ou dans la fente de laminage de la cage de laminage.

11. Procédé de fabrication d'un composant par thermoformage d'un produit plat en acier pourvu d'un revêtement anti-corrosion à base d'aluminium comprenant les étapes de procédé suivantes:

    i) génération d'un produit plat en acier par application du procédé selon l'une quelconque des revendications précédentes;
    ii) séparation d'une ébauche du produit plat en acier;
    iii) chauffage de l'ébauche à une température de thermoformage de 840 à 950 °C;
    iv) formage de l'ébauche chauffée à la température de thermoformage pour donner le composant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0971044 B1
- EP 2993248 A1
- WO 2012119973 A1
- WO 2012120081 A2